# EUROPEAN PATENT SPECIFICATION

(11) **EP 0 621 929 B1**
(45) Date of publication and mention of the grant of the patent: **15.01.1997**
(21) Application number: 94900262.0
(22) Date of filing: 25.11.1993
(51) Int. Cl.: F16D 65/56

(54) **AUTOMATIC BRAKE ADJUSTERS**
AUTOMATISCHE NACHSTELLEINRICHTUNG FÜR BREMSEN
DISPOSITIFS D'AJUSTAGE AUTOMATIQUE POUR FREINS

(30) Priority: 25.11.1992 GB 9224707
(43) Date of publication of application: 02.11.1994
(73) Proprietor: AUTOMOTIVE PRODUCTS PLC, Leamington Spa Warwickshire CV31 3ER (GB)
(72) Inventor: QUINEY, Kenneth Maurice, Kings Heath, Birmingham B13 0DA (GB)
(74) Representative: Morrall, Roger
(86) International application number: GB9302433
(87) International publication number: WO9412805

(56) References cited:
- EP-A- 0 388 057
- FR-A- 2 587 428
- GB-A- 1 287 884
- US-A- 5 067 596

## Description

The present invention relates to automatic brake adjusters.

In drum brakes typically a strut is interposed between the brake shoes to limit return movement of the brake shoes upon release of the brakes. Automatic adjustment means may be incorporated in the strut to adjust the length of the strut to take account of wear of the friction linings of the brake shoes and maintain the clearance between the friction linings and the brake drums within a predetermined range.

One method of adjusting the length of the strut is to include a screw mechanism which is operated by a pawl and ratchet mechanism, in response to relative movement of the brake shoes upon hydraulic brake actuation. Hitherto, the pawl mechanism of such adjusters has been pivotally mounted between one of the shoes and the strut, so that the pawl can follow movement of the shoe relative to strut which would be located with respect to the other shoe, these pawl mechanisms require one or more spring elements to maintain them in engagement with the shoe and ratchet wheel. Such mechanisms must be located in the confined space between the brake shoes and the wheel hub which imposes limitations on their design which will adversely affect their operation. Furthermore, such pawl mechanisms can easily become clogged with debris resulting from wear of the friction linings.

British patent 1,287,884 discloses an adjustment mechanism in which the strut includes a screw adjuster in which two parts of the strut move apart upon hydraulic operation of the brake. A leaf spring is attached between the two parts of the strut so that it is bowed when the strut is under tension. The spring has a pawl formation which engages a ratchet wheel, so that when the brake shoes move apart upon hydraulic brake actuation, the spring will force the two parts of the strut apart and in so doing will flatten causing the pawl formation to rotate the ratchet wheel which in turn rotates the screw adjuster to lengthen the strut. This arrangement overcomes many of the problems encountered hitherto. However, for accurate operation, the leaf spring must be located positively with respect to the two parts of the strut, so that it is secured with respect thereto, axially, rotationally and radially. While in the adjuster disclosed in British patent 1,287,884, axial location of the leaf spring is adequate, rotational and radial location are poor.

In EP 338057A, the present Applicant discloses a leaf spring with improved rotational and radial location.

The present invention provides a modification to the adjuster spring disclosed in EP 338057A having improved stress distribution within the spring location means.

Accordingly there is provided a brake adjuster comprising a strut assembly in the form of a first end strut for engagement with a first part of an associated brake and slideably engaging with a nut member which is screw threadedly connected to a second end strut for engagement with a second part of the associated brake, a leaf spring operatively connected between the first end strut and the nut member to bias them apart, the leaf spring having a pawl there on which is engageable with a ratchet wheel on the nut member to effect rotation of the nut member relative to the second strut member to increase the overall length of the strut assembly and hence adjust brake clearance when the leaf spring moves towards a relaxed condition, wherein the leaf spring has a hole at both ends thereof for engaging lugs operatively connected with the first strut and the nut member, characterised in that the spring includes an integral sprag adjacent each hole for engaging the respective lug operatively connected with the first strut and nut member.

Preferably a temperature sensitive lock device is provided on either the nut member or the first end strut for engaging an abutment means on the other of the nut member and first end strut to prevent axial separation thereof when the brake temperature exceeds a predetermined value.

Preferably the lock device is mounted on a sleeve member mounted for rotation on the nut member, and the abutment means is formed on the first end strut.

The invention also provides a drum or disc brake which includes a brake adjuster of the form described above.

The invention will now be described, by way of example only, and with reference to the accompanying drawings, in which:-
Figure 1 is an elevation of a drum brake which includes a brake adjuster in accordance with the present invention, with the drum removed;
Figure 2 is a section along the line II-II of Figure 1, with the drum in place;
Figure 3 is an elevation from one side of the brake adjuster showing the spring element used in the brake illustrated in Figure 1;
Figure 4 is a under view of the brake adjuster shown in Fig 3;
Figure 5 is an elevation from the other side of the brake adjuster shown in Figure 3, and
Figures 6a and 6b show details, on an enlarged scale, of a support bracket used in the brake adjuster of figures 3 to 5;
Figures 7a and 7b show details, on an enlargement scale, of a location aperture used at each end of the leaf spring used in the brake adjuster of figures 3 to 5, and
Figure 8 is a section through one limb of a disc brake caliper which includes a brake adjuster in accordance with the present invention.

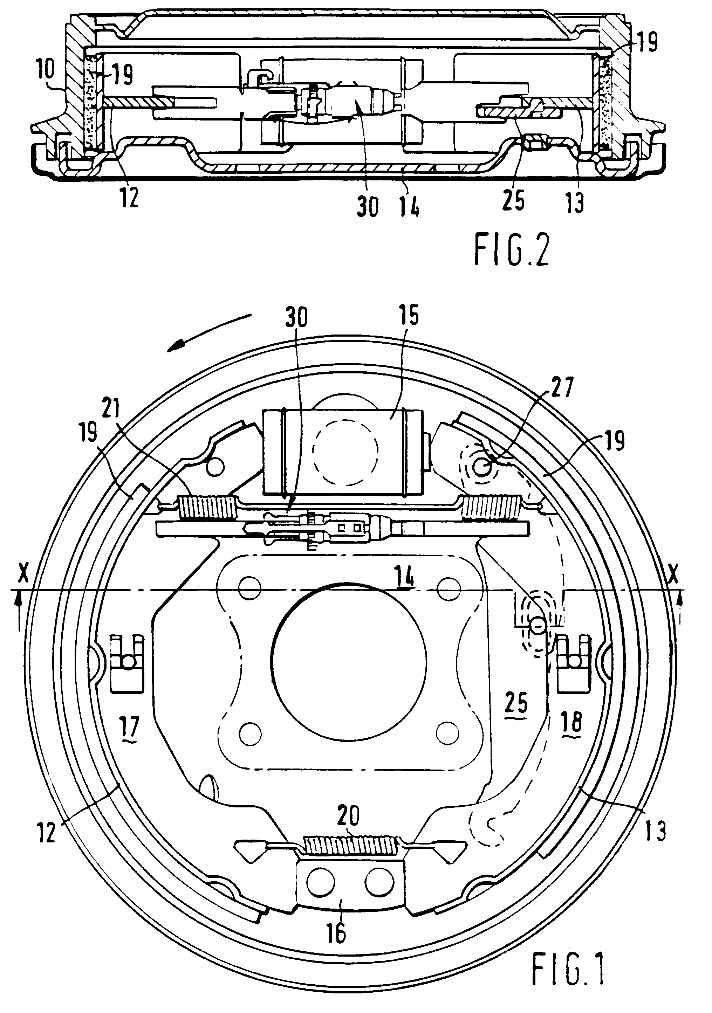

As illustrated in Figure 1, a drum brake comprises a drum 10 mounted for rotation with a hub (not shown). A pair of brake shoes 12 and 13 are mounted on a backing plate 14 between a double acting hydraulic cylinder 15 and an abutment 16. One end of the web 17, 18 of each shoe 12, 13 respectively engages a piston of the hydraulic cylinder 15 and the other end engages the abutment 16. Thus on actuation of the hydraulic cylinder 15 the brake shoes 12 and 13 are forced apart pivotting on the abutment 16, so that friction linings 19 on the brake shoes 12,13 will be forced into frictional engagement with the brake drum 10. A pair of pull off springs 20, 21 acts between the brake shoes 12 and 13 urging them together, so that when the hydraulic cylinder 15 is released, the brake shoes 12, 13 will move away from the brake drum 10.

A handbrake lever 25 is pivotted to web 18 of brake shoe 12 by means of a pivot 27. A strut assembly 30 extends between the webs 17 & 18 of the brake shoes adjacent the hydraulic actuator 15 to limit movement of one brake shoe 12 towards the other 13 and thus the clearance between the friction linings 19 and brake drum 10. Handbrake lever 25 also engages the strut 30 so that pivotting of the handbrake lever 25 clockwise, as illustrated in Figure 1, about its pivot 27 by a handbrake operating mechanism (not shown) causes the brake shoes 12 and 13 to move apart to that the friction linings 19 engage the drum 10.

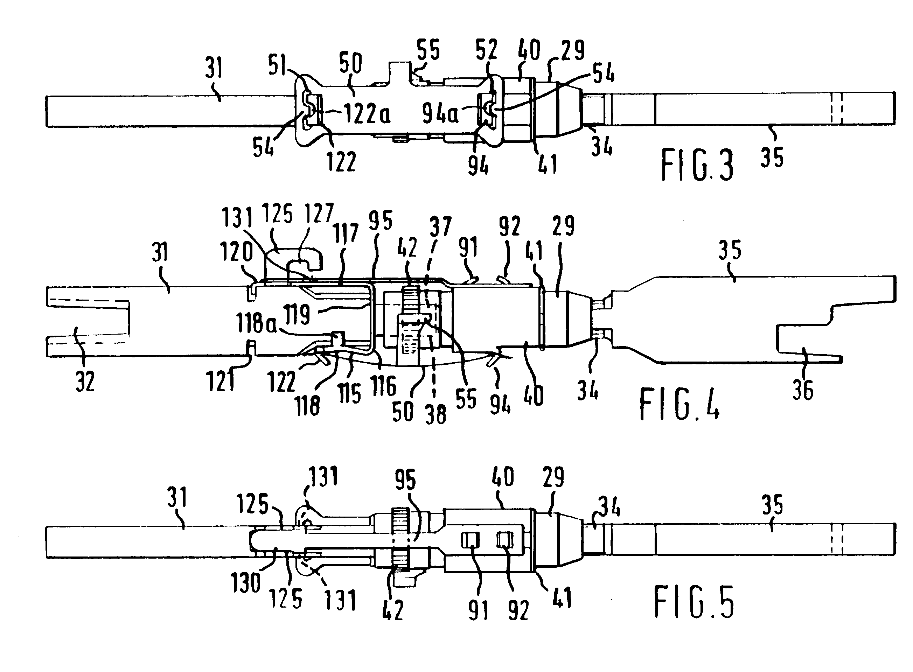

As illustrated in greater detail in Figures 3-5, the strut assembly 30 includes an automatic brake adjuster and comprises three members, a first end strut 31, an intermediate member 29 and a second end strut 35. The first end strut 31 has having a forked end 32 which is adapted to engage the web 17 of brake shoe 12 to non-rotatably locate that end of the strut assembly 30 with respect to the shoe 12. Strut 31 has a spigot 37 at its other end which slideably engages in a socket 38 in the adjacent end of the intermediate member 29.

The intermediate member 29 is connected to the second end strut 35 by means of an interengaging screw thread 34.

The second end strut 35 has a forked end portion 36 which engages the web 18 of shoe 13 and handbrake lever 25 to non-rotatably locate that end of the strut assembly 30 with respect to the shoe 13.

A sleeve member 40 is mounted on intermediate member 29 for rotation relative thereto, the sleeve member 40 being located axially of the intermediate member 29 by means of circlip 41. A ratchet wheel formation 42 is provided on the intermediate member 29 for rotation of the intermediate member 29 relative to the second end strut 35. The intermediate member 29 is thus acting as a nut member and rotation of the nut member adjusts the overall length of the strut assembly 30.

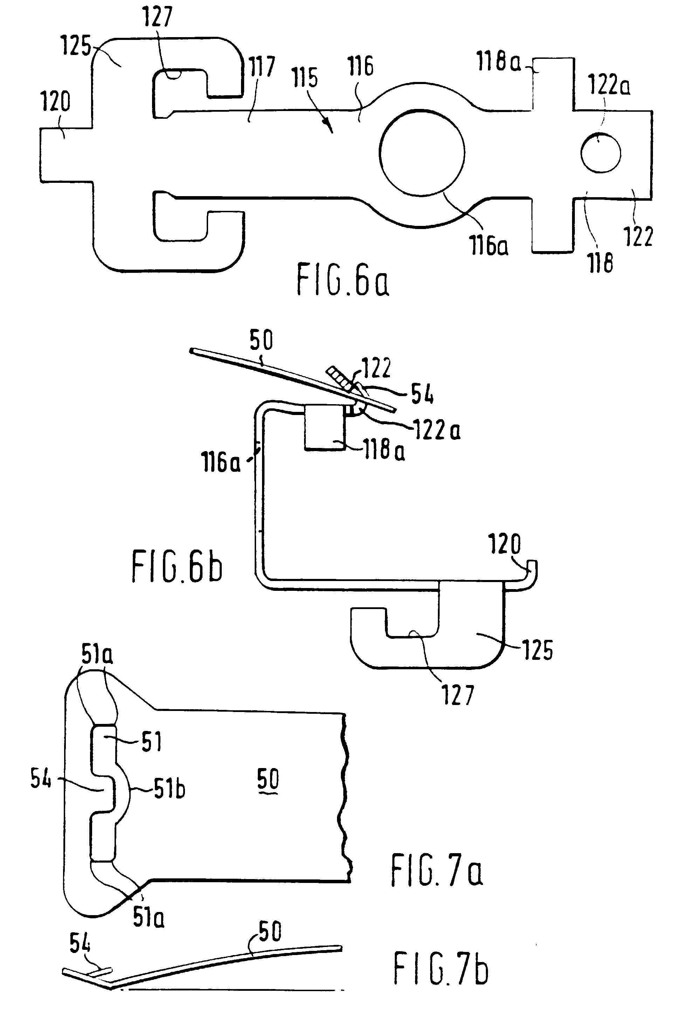

A bracket 115 is mounted on the first end strut 31, and has a central base portion 116 with a pair of arms 117 and 118 extending along the strut 31 substantially perpendicular to the base portion 116. The base portion 116 has a central circular aperture 116a which locates over the spigot portion 37 of the first end strut 31, so that the central base portion 116 engages a shoulder 119 between the spigot portion 37 and the rest of said first end strut. One arm 117 extends axially of the first end strut 31 and has an end 120 which is bent over to engage a groove 121 in the first end strut to locate the bracket 115. The end of arm 118 is bent to form a lug 122 extending outwardly and towards the spigot portion 37 and two stabilising tabs 118a which extend on either side of end strut 31. Figure 6a shows the blank from which bracket 115 is bent. As can be seen from figures 6a and 6b the region of the blank which is bent over to form lug 122 is apertured at 122a.

The sleeve member 40 is formed as a tubular member with tabs 91 and 92 pressed out of the sleeve to engage through apertures at one end of a bi-metallic lock member 95. Tabs 91 and 92 are folded over to secure the lock member 95 to the sleeve member 40. The opposite side of the sleeve is formed with an integral lug 94 which is apertured at 94a and extends outwardly and towards spigot 37.

The lugs 122 and 94 extend in opposition towards each other and are undercut. A leaf spring 50 is located under compression between the lugs 122 and 94, so that it bows away from the strut assembly 30. As illustrated in greater detail in Figure 3, apertures 51 and 52 are provided adjacent each end of the leaf spring, and a sprag 54 is formed on the outer edge of each aperture 51 and 52 to project inwardly. The shape of apertures 51 and 52 is shown in detail in figures 7a and 7b in relation to aperture 51. Each aperture is generally rectangular with rounded corners 51a and an arcuate recess 51b opposite the sprag 54 to facilitate engagement of the leaf spring with the lugs 94,122. As will be appreciated the avoidance of sharp corners defining the edges of apertures 51 and 52 and the provision of a significant width of spring material surrounding each aperture greatly reduces the build up of stress concentrations in the ends of the spring.

The leaf spring 50 is located between the lugs 122 and 94 so that the inner edges of apertures 51 and 52 engage the undercut faces of the lugs 122 and 94 and the sprags 54 lock the outer edge of the apertures onto the lugs by engaging in the apertures 122a and 94a (see Figure 6b). The leaf spring is therefore secured axially, radially and rotationally with respect to the strut assembly. Centrally of the leaf spring 50, a pawl formation 55 extends substantially normal to the plane of the leaf spring 50 for engaging the ratchet wheel 42.

A pair of parallel flange formations 125 are provided on either side of arm 117 adjacent the end thereof. These flange formations 125 are provided with recessed arms 127. The bimetallic lock member 95 extends parallel to the arm 117 so that the free end 130 thereof locates between the flange formations 125 of bracket 115. The bimetallic lock member 95 has a pair of laterally extending lugs 131 adjacent end 130, these lugs 131 being located such that when the members of the strut 30 are fully compressed by the pull off springs 20, 21 the lugs 131 will be aligned axially with the recesses 127. Under normal operating temperatures, the lugs 131 are clear of recesses 127, so that adjustment of the strut 30 will occur as described below.

However, if the temperature of the brake components rises above a predetermined value, the bimetallic element 105 will deform so that the lugs 131 engage in recesses 127 preventing further adjustment.

Under normal hydraulic operation of the brake, the cylinder 15 will force the ends of brake shoes 12 and 13 apart so that the friction linings 19 engage the drum 10. Relative movement of the shoes 12 and 13 will allow the end strut 31 of the strut assembly 30 to move away from the nut member 29 under the influence of the spring 50. This movement will cause the spring 50 to flatten so that the pawl formation 55 moves relative to ratchet wheel formation 42 causing the ratchet wheel formation 42 to rotate. Rotation of the ratchet wheel formation 42 will rotate the nut member 29 so that the threaded portion thereof is unscrewed relative to threaded portion 34 of end strut 35. The effective length of the strut assembly 30 is thereby increased to accomodate wear of the friction linings 19 and maintain the clearance between the friction linings 19 and drum 10 within a predetermined range, when the brake is released.

Upon the release of the brake, the shoes will move together under the influence of pull-off springs 20 and 21 until end strut 31 again abuts the end of nut member 29. This return movement will cause the spring 50 to bow outwardly and the pawl formation 55 to ride up the inclined face of one of the teeth of the ratchet wheel formation 42. The degree of adjustment will depend upon the amount of movement of the brake shoes 12 and 13, the pitch of the teeth on the ratchet wheel formation 42 and the pitch of the threaded formations 33 and 34. The pitch of the teeth on the ratchet wheel formation 42 and the pitch of threads 33 and 34 are selected such that incremental adjustment will occur maintaining the clearance between the friction elements 19 and brake drum 10 within the required range which lies between the minimum running clearance required and the maximum travel permitted by the handbrake mechanism.

If the temperature of the brake rises above a predetermined value, above which automatic adjustment of the strut assembly 30 may cause over-adjustment due to expansion of the brake drum 10, the bimetallic lock member 95 will engage the recesses 127 of flange formations 125 thus preventing end strut 31 from moving away from the nut member 29, thereby preventing rotation of the ratchet wheel formation 42 by the pawl formation 55. Relative movement between the shoes 12 and 13 and the strut assembly 30 is permitted by movement of the web portions 26 and 28 in the forked end portions 32 ands 36 respectively.

It will be appreciated that strut assembly 30 described above can also be used in a single shoe type of drum brake of, for example, the type described in the Applicant's co-pending application PCT/GB93/02347 with the strut assembly acting between the opposed ends of the single brake shoe.

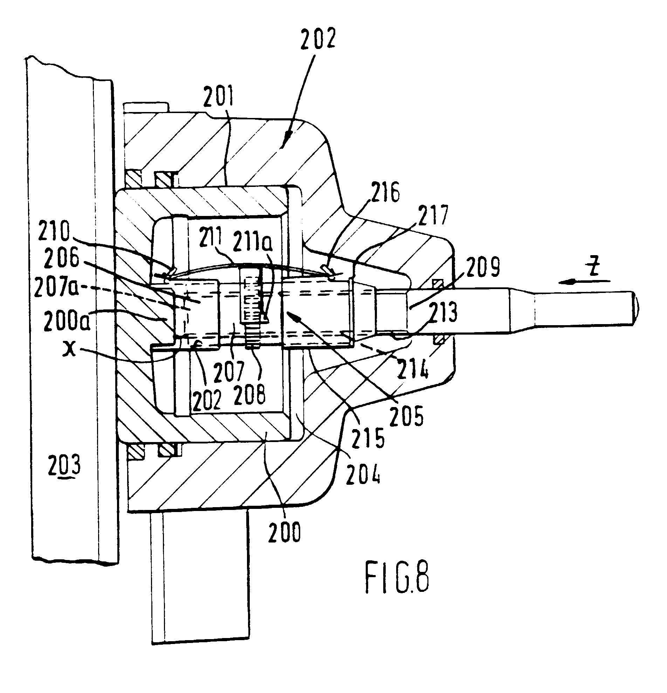

Figure 8 shows a similar type of brake adjuster 205 used as part of a handbrake mechanism in a disc brake in which a piston 200 is slideable in a bore 201 in one side of a caliper 202 to press a disc pad 203 against a disc (not shown). The disc brake may be of the pivotting or sliding caliper type or of the fixed caliper type with the piston movable in response to the pressurisation of hydraulic chamber 204.

The brake adjuster is of the same three member construction with a first end strut 206 in the form of a collar which engages a boss 200a on the inside of the piston 200, an intermediate nut member 207 which carries a ratchet wheel 208, and a second end strut 209.

First end strut 206 has a lug 210 for the support and location of one end of leaf spring 211 and a bore 212 in which one end of intermediate nut member 207 slides. Second end strut 209 has a screw threaded portion 213 which engages a screw threaded bore 214 down the centre of intermediate nut member 207. A sleeve 215 carrying a second spring lug 216 encircles intermediate nut member 207 and is axially located thereon by a circlip 217.

End strut 209 is connected to a hand brake operating mechanism (not shown) so that disc pad 203 can be mechanically brought into contact with the associated disc by movement of end strut 209 in direction Z of figure 6. Initial movement of end strut 209 in direction Z closes clearance 'x' to bring the end 207a of nut member 207 into contact with the boss 200a on piston 200 to press pad 203 into contact with the associated disc. Movement of end strut 209 and nut member 207 through distance 'x' causes spring 211 to bow and the associated pawl 211a moves up the teeth on ratchet wheel 208.

Initially when no brake clearance adjustment is required distance x is such that the pawl 211a does not move sufficiently over ratchet wheel 208 to engage behind the next tooth on the ratchet wheel. However, after sufficient wear of pad 203 has taken place which results in the movement of the non-operative position of piston 200 to the left in figure 8 the distance x will be sufficient for the spring 211 to bow sufficiently for pawl 211a to engage behind the next tooth on the ratchet wheel so that when the handbrake mechanism is next released the bowed spring will rotate nut member 207 relative to end strut 209 thus increasing the effective length of the brake adjuster via the screw threads 213 and 214 thus reducing the distance x to a level at which no brake clearance adjustment will take place on the next mechanical operation of the disc brake. Thus automatic adjustment of the handbrake mechanism is provided.

## Claims

1. A brake adjuster comprising a strut assembly in the form of a first end strut (31) for engagement with a first part (17) of an associated brake and slideably engaging with a nut member (29) which is screw threadedly connected to a second end strut (35) for engagement with a second part (18) of the associated brake, a leaf spring (50) operatively connected between the first end strut (31) and the nut member (29) to bias them apart, the leaf spring having a pawl (55) thereon which is engageable with a ratchet wheel (42) on the nut member (29) to effect rotation of the nut member relative to the second strut member (35) to increase the overall length of the strut assembly and hence adjust brake clearance when the leaf spring (50) moves towards a relaxed condition, wherein the leaf spring (50) has a hole (51,52) at both ends thereof for engaging lugs (122,94) operatively connected with the first strut (31) and the nut member (29), characterised in that the spring includes an integral sprag (54) adjacent each hole for engaging the respective lug (122,94) operatively connected with the first strut and nut member.

2. A brake adjuster as claimed in Claim 1 wherein each sprag (54) is on the axially outer edge of each hole (51,52) for engaging each lug (122,94).

3. A brake adjuster as claimed in Claim 1 or Claim 2 wherein each sprag (54) engages in an aperture 91a, 122a in each lug (94,122).

4. A brake adjuster as claimed in any one of Claims 1 to 3 wherein the end portions of the leaf spring (50) are enlarged so that the width of spring material encompassing each hole (51,52) is of substantially equal width around each respective hole.

5. A brake adjuster as claimed in Claim 4 wherein the end portions of the leaf spring are generally trapezoid and the holes (51,52) are generally rectangular.

6. A brake adjuster as claimed in any one of Claims 1 to 5 wherein a temperature sensitive lock device (95) is provided on either the nut member (29) or the first end strut (31) for engaging an abutment means (125) on the other of the nut member and first end strut to prevent axial separation thereof when the temperature of the associated brake exceeds a predetermined value.

7. A brake adjuster as claimed in Claim 6, wherein the temperature sensitive lock device (95) is mounted on a sleeve member (40) rotationally mounted on the nut member, and the abutment means (125) is axially fast with the first end strut (31).

8. A brake adjuster as claimed in claims 6 or claim 7 wherein the first end strut has its spring lug (122) and abutment means (125) formed on a bracket (115) which surrounds and is axially located on a main body portion of the first end strut (31).

9. A brake adjuster as claimed in any one of claims 1 to 7 wherein the lug (94) operatively connected with the nut member (29) is formed on a sleeve (40) which surrounds and is axially located (41) on the main body portion of the second end strut (35).

10. A drum brake characterised by the inclusion of a brake adjuster as claimed in any one of claims 1 to 9, the first and second end struts acting against either end portions of separate brake shoes in a two shoe brake or against opposed ends of a single shoe in a single shoe brake.

11. A disc brake characterised by the inclusion of a brake adjuster as claimed in any one of claims 1 to 9, the first end strut operatively connected to one of a pad or an operating mechanism and the second end strut operatively connected to the other of the pad or operating mechanism.

## Patentansprüche

1. Bremseinstellvorrichtung, die folgende Komponenten aufweist: eine Druckstab-Baugruppe in Form eines ersten Enddruckstabes (31), der mit einem ersten Teil (17) einer dazugehörigen Bremse zum Eingriff kommt und gleitend mit einem Mutterelement (29) zum Eingriff kommen kann, das durch ein Schraubgewinde mit einem zweiten Enddruckstab (35) für den Eingriff mit einem zweiten Teil (18) der dazugehörigen Bremse verbunden ist, eine Blattfeder (50), die funktionell zwischen den ersten Enddruckstab (31) und das Mutterelement (29) eingefügt ist, um diese so vorzuspannen, daß sie auseinander gehalten werden, wobei sich auf der Blattfeder eine Klinke (55) befindet, die in ein Klinkenrad (42) auf dem Mutterelement (29) eingreifen kann, um die Drehung des Mutterelements im Verhältnis zum zweiten Druckstab (35) zu bewirken, um so die Gesamtlänge der Druckstab-Baugruppe zu vergrößern und folglich das Bremsspiel zu regulieren, wenn sich die Blattfeder (50) hin zu einem entspannten Zustand bewegt, wobei sich in der Blattfeder (50) an deren beiden Enden ein Loch (51, 52) befindet, um in Nasen (122, 94) einzugreifen, die funktionell mit dem ersten Druckstab (31) und dem Mutterelement (29) verbunden sind, dadurch gekennzeichnet, daß die Feder angrenzend an jedes der Löcher einen integralen Hemmkeil (54) zum Eingriff mit der entsprechenden Nase (122, 94) einschließt, die funktionell mit dem ersten Druckstab und dem Mutterelement verbunden sind.

2. Bremseinstellvorrichtung nach Anspruch 1, bei der sich jeder Hemmkeil (54) an der in Axialrichtung äußeren Kante jedes der Löcher (51, 52) befindet, um in die einzelnen Nasen (122, 94) einzugreifen.

3. Bremseinstellvorrichtung nach Anspruch 1 oder Anspruch 2, bei der jeder Hemmkeil (54) in eine Öffnung (91a, 122a) in jeder Nase (94, 122) eingreift.

4. Bremseinstellvorrichtung nach einem der Ansprüche 1 bis 3, bei der die Endabschnitte der Blattfeder (50) vergrößert sind, so daß die Breite des Federmaterials, das jedes der Löcher (51, 52) umschließt, um jedes der entsprechenden Löcher im wesentlichen gleich ist.

5. Bremseinstellvorrichtung nach Anspruch 4, bei der die Endabschnitte der Blattfeder im allgemeinen trapezförmig sind und die Löcher (51, 52) im allgemeinen rechteckig sind.

6. Bremseinstellvorrichtung nach einem der Ansprüche 1 bis 5, bei dem entweder auf dem Mutterelement (29) oder auf dem ersten Enddruckstab (31) ein temperaturempfindliches Feststell-Bauelement (95) zum Eingriff in ein Widerlager-Element (125) auf dem anderen der Elemente Mutterelement oder erster Enddruckstab vorhanden ist, um deren Lösung in Axialrichtung zu verhindern, wenn die Temperatur der dazugehörigen Bremse einen festgelegten Wert übersteigt.

7. Bremseinstellvorrichtung nach Anspruch 6, bei der das temperaturempfindliche Feststell-Bauelement (95) auf einem Hülsenelement (40) angebracht ist, das drehbar auf dem Mutterelement befestigt ist, und das Widerlager-Element (125) in Axialrichtung fest mit dem ersten Enddruckstab (31) verbunden ist.

8. Bremseinstellvorrichtung nach Anspruch 6 oder Anspruch 7, bei welcher die Federnase (122) und das Widerlager-Element (125) des ersten Enddruckstabs auf einer Klammer (115) gebildet werden, die einen Hauptkörper des ersten Enddruckstabs (31) umschließt und axial auf diesem angeordnet ist.

9. Bremseinstellvorrichtung nach einem der Ansprüche 1 bis 7, bei der die Nase (94), die funktionell mit dem Mutterelement (29) verbunden ist, auf einer Hülse (40) gebildet wird, die den Hauptkörper des zweiten Enddruckstabs (35) umschließt und axial (41) auf diesem angeordnet ist.

10. Trommelbremse, gekennzeichnet durch die Einbeziehung einer Bremseinstellvorrichtung nach einem der Ansprüche 1 bis 9, wobei der erste und der zweite Enddruckstab entweder gegen die Endabschnitte von getrennten Bremsbacken bei einer Zweibackenbremse oder gegen die gegenüberliegenden Enden eines einzelnen Bremsbackens bei einer Einbackenbremse wirken.

11. Scheibenbremse, gekennzeichnet durch die Einbeziehung einer Bremseinstellvorrichtung nach einem der Ansprüche 1 bis 9, wobei der erste Enddruckstab funktionell entweder mit einem Bremsbelag oder einem Betätigungsmechanismus verbunden ist und der zweite Enddruckstab funktionell mit dem anderen der Elemente Bremsbelag oder Betätigungsmechanismus verbunden ist.

## Revendications

1. Dispositif d'ajustage de frein comprenant un assemblage d'entretoises sous forme d'une première entretoise d'extrémité (31) destinée à s'engager dans une première partie (17) d'un frein associé et à s'engager par glissement dans un élément d'écrou (29), constitué par une vis connectée par filetage à une deuxième entretoise d'extrémité (35) en vue d'un engagement dans une deuxième partie (18) du frein associé. un ressort à lames (50) connecté en service entre la première entretoise d'extrémité (31) et l'élément d'écrou (29) pour les pousser en vue de leur écartement, le ressort à lames comportant un cliquet (55) pouvant s'engager dans une roue à rochet (42) sur l'élément d'écrou (29) pour entraîner la rotation de l'élément d'écrou par rapport au deuxième élément d'entretoise (35), pour accroître la longueur globale de l'assemblage d'entretoises et ajuster ainsi le jeu du frein lorsque le ressort à lames (50) se déplace vers une position de repos, le ressort à lames (50) comportant un trou (51, 52) au niveau des deux extrémités correspondantes pour s'engager dans des languettes (122, 94) connectées en service à la première entretoise (31) et l'élément d'écrou (29), caractérisé en ce que le ressort englobe une cale qui en fait partie intégrante (54) près de chaque trou, pour s'engager dans la languette respective (122, 94) connectée en service à la première entretoise et à l'élément d'écrou.

2. Dispositif d'ajustage de frein selon la revendication 1, dans lequel chaque cale (54) est agencée sur le bord axialement externe de chaque trou (51, 52) pour s'engager dans chaque languette (122, 94).

3. Dispositif d'ajustage de frein selon les revendications 1 ou 2, dans lequel chaque cale (54) s'engage dans une ouverture (91a, 122a) dans chaque languette (94, 122).

4. Dispositif d'ajustage de frein selon l'une quelconque des revendications 1 à 3, dans lequel les parties d'extrémité du ressort à lames (50) sont élargies, de sorte que la largeur du matériau du ressort entourant chaque trou (51. 52) est pratiquement égale autour de chaque trou respectif.

5. Dispositif d'ajustage de frein selon la revendication 4, dans lequel les parties d'extrémité du ressort à lames sont généralement trapézoïdales, les trous (51, 52) étant généralement rectangulaires.

6. Dispositif d'ajustage de frein selon l'une quelconque des revendications 1 à 5, dans lequel un dispositif de verrouillage sensible à la température (95) est agencé ou bien sur l'élément d'écrou (29) ou bien sur la première entretoise d'extrémité (31) en vue de son engagement dans un moyen de butée (125) sur l'autre élément, l'élément d'écrou ou la première entretoise d'extrémité, pour empêcher une séparation axiale correspondante lorsque la température du frein associé dépasse une valeur prédéterminée.

7. Dispositif d'ajustage de frein selon la revendication 6, dans lequel le dispositif de verrouillage sensible à la température (95) est monté sur un élément de manchon (40), monté par rotation sur l'élément d'écrou, le moyen de butée (125) étant fixé axialement à la première entretoise d'extrémité (31).

8. Dispositif d'ajustage de frein selon les revendications 6 ou 7, dans lequel la languette de ressort (122) et le moyen de butée (125) de la première entretoise d'extrémité sont agencés sur une console (115) entourant une partie de corps principal de la première entretoise d'extrémité (31) et axialement agencée sur celle-ci.

9. Dispositif d'ajustage de frein selon l'une quelconque des revendications 1 à 7, dans lequel la languette (94) connectée en service à l'élément d'écrou (29) est agencée sur un manchon (40) entourant la partie de corps principal de la deuxième entretoise d'extrémité (35) et axialement agencée sur celle-ci.

10. Frein à tambour caractérisé par l'inclusion d'un dispositif d'ajustage de frein selon l'une quelconque des revendications 1 à 9, les première et deuxième entretoises agissant contre les deux parties d'extrémité de segments de frein séparés dans un frein à deux segments ou contre les extrémités opposées d'un seul segment dans un frein à segment unique.

11. Frein à disque caractérisé par l'inclusion d'un dispositif d'ajustage de frein selon l'une quelconque des revendications 1 à 9, la première entretoise d'extrémité étant connectée en service à un patin ou à un mécanisme opérationnel et la deuxième entretoise d'extrémité étant connectée en service à l'autre élément, au patin ou au mécanisme opérationnel.
